# EUROPEAN PATENT APPLICATION

(11) **EP 3 389 030 A1**
(43) Date of publication of application: **17.10.2018**
(21) Application number: 16873107.3
(22) Date of filing: 09.12.2016
(51) Int. Cl.: G09B 19/00, A63B 69/00, G09B 9/058

(54) **DEVICE FOR PRESENTING ONOMATOPOEIA REGARDING EVALUATION RESULT FOR USER ACTION**

(30) Priority: 11.12.2015 JP 2015242384
(71) Applicant: Yamaha Hatsudoki Kabushiki Kaisha, Iwata-shi, Shizuoka 438-8501 (JP)
(72) Inventor: INUI, Shogo, Iwata-shi Shizuoka 438-8501 (JP); SUEGAMI, Takashi, Iwata-shi Shizuoka 438-8501 (JP); DAIMOTO, Hiroshi, Iwata-shi Shizuoka 438-8501 (JP); ICHII, Kyonosuke, Iwata-shi Shizuoka 438-8501 (JP)
(74) Representative: Zimmermann, Tankred Klaus
(86) International application number: PCT/JP2016/086697
(87) International publication number: WO 2017/099214

(57) **Abstract**

[Object]

In a motion in which a user's action continues, an evaluation result of the user's action is presented to the user while the user is carrying out the motion.

[Means for Solution]

A motorcycle 1 includes a riding evaluation apparatus 10. The riding evaluation apparatus 10 includes an evaluation section 202, which performs a riding evaluation to an operation by the rider who is operating the motorcycle 1, based on measurement information obtained through measurement by various sensors. The evaluation section 202 makes one riding evaluation for a plurality of evaluation items. The evaluation section 202 identifies an onomatopoeia which corresponds to the riding evaluation. An onomatopoeia obtaining section 300 obtains data which corresponds to the onomatopoeia selected by the evaluation section 202. The obtained onomatopoeia is presented from loudspeakers 501 or in a display 502 which is provided in a helmet worn by the rider.

## Description

### TECHNICAL FIELD

The present teaching relates to techniques to present a user with an evaluation result of the user's action. Specifically, the teaching relates to a technique to present a user with the evaluation result of the user's action by using onomatopoeia.

### BACKGROUND ART

Human activities such as sports, operating a vehicle or a machine involves motions and actions of a person. In performing these activities, the person who is performing these activities is interested in the contents of how he/she is performing. A person who has made an action is interested in a result caused by his/her own action. By receiving evaluations regarding results of the action he/she made, a person can learn the contents of how he/she performed.

Human activities such as sports, operating a vehicle or a machine involves motions and actions of a person. When a person wants to become more capable of performing these activities as he/she desires, training is useful. Through the training, a person can repeat actions which lead to successful results or actions which lead to unsuccessful results, whereby the person can make adjustments on his/her motions and actions to improve his/her performance.

While the training is often performed by relying on a person's own feeling as understood from the above, there have been proposals to use apparatuses or systems which utilize computers, sensors and other devices, as a means for assisting the training.

The following Patent Document 1 (Japanese Patent Application Publication No. 2005-524048) relates to systems for evaluating sport trainings. A user of the training system puts on a piece of wear which is made of an electrically conductive fiber for the training system. In accordance with electrical impedance fluctuation in the electrically conductive fiber, the system outputs feedback instructions to the user. The feedback instructions are outputted as audio signals. Alternatively, the feedback instructions may be outputted in the form of vibratory signals or physically stimulative signals perceivable by the user. As another alternative, the feedback instructions are outputted in the form of color change in the sensor. Since the user wears the appliance which is made of an electrically conductive fiber, the appliance can closely follow the athlete's movements.

The following Patent Document 2 (Japanese Patent Application Publication No. 2014-108750) relates to a riding skill judgment apparatus for judging a skill of a rider who is operating a motorcycle. The rider's riding skill is evaluated by a riding skill evaluation section, which calculates a riding skill stability score, a riding skill turnability score and an overall characteristics score; and then outputs these calculated scores to a correction section. An overall score adjustment section corrects the overall characteristics score based on correction condition information and various scores. The riding skill stability score and the riding skill turnability score are corrected in accordance with road conditions, and therefore it is possible to judge riding skills of the rider accordingly to a type of the road on which the rider is traveling.

### CITATION LIST

### PATENT DOCUMENT

Patent Document 1: Japanese Patent Application Publication No. 2005-524048
Patent Document 2: Japanese Patent Application Publication No. 2014-108750

### SUMMARY OF INVENTION

### TECHNICAL PROBLEM

In a sport where an action is completed for each step, or in an operation where an action is performed within a short time, it is possible to spend a long time after the action is made, to see evaluation of the action. For example, in a sport where an action is completed for each step, it is possible to use a camera or a video recorder to capture a complete sequence of action, and then take time to review the recorded images after the action is made. However, in a sport where an action is made continuously, it should be convenient if evaluation of an action could be checked while the training is going on. Also, in a case where operation of a machine is made continuously, it should be convenient if evaluation of an action could be checked while the operation is going on.

More generally, in any motion where an action is completed for each step, or in any motion where an action is performed within a short time, it is possible to spend a long time after the action is made, to see evaluation of the action. However, in a motion where an action is made continuously, it should be convenient if evaluation of an action could be checked while the action is continued.

An object of the present teaching is to provide a system to enable a person who makes an action to check an evaluation of the action while he/she is continuing the action.

Another object of the present teaching is to provide a system to enable a person who is exercising in a training regarding a continuous action, to check an evaluation of the action while he/she is continuing the action.

### SOLUTION TO PROBLEM and ADVANTAGEOUS EFFECTS OF INVENTION

### (Configuration 1)

A device for presenting an onomatopoeia regarding an evaluation result for a user's action as an embodiment of the present teaching includes: a measurement result inputting section; an onomatopoeia data obtaining section; and an onomatopoeia outputting section.

The measurement result inputting section is the section into which measurement results measured by measuring devices regarding events arising from a user's action are inputted.

The onomatopoeia data obtaining section obtains onomatopoeia data which indicates an onomatopoeia corresponding to an evaluation of the user's action based on the measurement results inputted to the measurement result inputting section.

The onomatopoeia outputting section outputs the onomatopoeia data obtained by the onomatopoeia data obtaining section to a notification device capable of making or providing a notification to the user in a form of audio or text, thereby causing the notification device to present an onomatopoeia which corresponds to the evaluation of the user's action in the form of audio or text while the user is carrying out the user's action.

The device for presenting an onomatopoeia regarding an evaluation result for a user's action according to the present embodiment is capable of presenting an evaluation of an action to the user under the state in which the user who is making or performing the action is carrying out the action. The user can grasp evaluation contents while he/she is making or performing an action. This allows the user to continue his/her action with him/her grasping the evaluation contents.

### (Configuration 2)

In the device for presenting an onomatopoeia regarding an evaluation result for a user's action according to the above-described Configuration 1, there may be an arrangement that the onomatopoeia data obtaining section obtains onomatopoeia data which indicates one onomatopoeia for a plurality of evaluation items that was obtained by making one evaluation for the plurality of evaluation items.

If onomatopoeia is not utilized, evaluations regarding the plurality of evaluation items must be explained in the form of text for example, and the user must spend a long time to grasp the content. In other words, it is difficult for him/her to read and understand a long explanation while continuing some other actions. However, onomatopoeia can express evaluations on a plurality of evaluation items concisely, so the user can grasp the evaluation result easily.

### (Configuration 3)

In the device for presenting an onomatopoeia regarding an evaluation result for a user's action of the above-described Configuration 1, there may be an arrangement that the onomatopoeia data obtaining section obtains onomatopoeia data which indicates one onomatopoeia which is representing a multi-graded evaluation regarding one evaluation item that was obtained by making the multi-graded evaluation regarding the one evaluation item.

If onomatopoeia is not utilized, text for example, must be used in order to express evaluation contents evaluated in a multi-graded scale regarding one evaluation item, and the user must spend a long time to grasp the contents. In other words, it is difficult for him/her to read and understand a long explanation while continuing some other actions. However, onomatopoeia can express multi-graded evaluations for one evaluation item concisely, so the user can grasp the evaluation result easily.

### (Configuration 4)

In the device for presenting an onomatopoeia regarding an evaluation result for a user's action according to any one of the Configurations 1 through 3, there may be an arrangement that the onomatopoeia data obtained by the onomatopoeia data obtaining section is provided, as the evaluation of the user's action, by comparison of the measurement result or a calculated value based on the measurement result with a predetermined threshold value.

By comparing a measurement result or the like with a predetermined threshold value it is possible to obtain an evaluation result of the user's motion.

### (Configuration 5)

In the device for presenting an onomatopoeia regarding an evaluation result for a user's action according to any one of the Configurations 1 through 4, the measurement result may contain information from a measurement of a state of an operation object operated by the user.

This enables evaluation of the user's action to be based on the state of the object operated by the user.

### (Configuration 6)

The device for presenting an onomatopoeia regarding an evaluation result for a user's action according to any one of the Configurations 1 through 5 may further include an evaluation section which evaluates the user's action based on the measurement result regarding the event caused by user's action measured by the measuring device.

This allows the device for presenting an onomatopoeia to perform evaluation of actions.

### (Configuration 7)

A program for presenting an onomatopoeia regarding an evaluation result for a user's action as an embodiment of the present teaching causes a computer to execute a measurement result inputting process, an onomatopoeia data obtaining process and an onomatopoeia outputting process.

The measurement result inputting process inputs measurement results measured by measuring devices regarding events arising from a user's action.

The onomatopoeia data obtaining process obtains onomatopoeia data which indicates an onomatopoeia corresponding to an evaluation of the user's action based on the measurement results inputted by the measurement result inputting process.

The onomatopoeia outputting process outputs the onomatopoeia data obtained by the onomatopoeia data obtaining process to a notification device capable of making a notification to the user in a form of audio or text, thereby causing the notification device to present an onomatopoeia which corresponds to the evaluation of the user's action in the form of audio or text while the user is carrying out the user's action.

The program for presenting an onomatopoeia regarding an evaluation result for a user's action according to the present embodiment is capable of presenting an evaluation of an action to the user under the state in which the user who is making the action is carrying out the action. This allows the user to make use of the evaluation contents as a feedback while continuing his/her action.

### (Configuration 8)

In the program for presenting an onomatopoeia regarding an evaluation result for a user's action according to the above-described Configuration 7, there may be an arrangement that the onomatopoeia data obtaining process obtains onomatopoeia data which indicates one onomatopoeia for a plurality of evaluation items that was obtained by making one evaluation for the plurality of evaluation items.

If onomatopoeia is not utilized, evaluations regarding the plurality of evaluation items must be explained in the form of text for example, and the user must spend a long time to grasp the content. In other words, it is difficult for him/her to read and understand a long explanation while continuing some other actions. However, onomatopoeia can express evaluations on a plurality of evaluation items concisely, so the user can grasp the evaluation result easily.

### (Configuration 9)

In the program for presenting an onomatopoeia regarding an evaluation result for a user's action according to the Configuration 7 or 8, there may be an arrangement that the onomatopoeia data obtaining process obtains onomatopoeia data which indicates one onomatopoeia which is representing a multi-graded evaluation regarding one evaluation item that was obtained by making the multi-graded evaluation regarding the one evaluation item.

If onomatopoeia is not utilized, text for example, must be used in order to express evaluation contents evaluated in a multi-graded scale regarding one evaluation item, and the user must spend a long time to grasp the contents. In other words, it is difficult for him/her to read and understand a long explanation while continuing some other actions. However, onomatopoeia can express multi-graded evaluations for one evaluation item concisely, so the user can grasp the evaluation result easily.

### (Configuration 10)

In the program for presenting an onomatopoeia regarding an evaluation result for a user's action according to any one of the Configurations 7 through 9, there may be an arrangement that the onomatopoeia data obtained by the onomatopoeia data obtaining process is provided, as the evaluation of the user's action, by comparison of the measurement result or a calculated value based on the measurement result with a predetermined threshold value.

By comparing a measurement result or the like with a predetermined threshold value it is possible to obtain an evaluation result of the user's motion in real time.

### (Configuration 11)

In the program for presenting an onomatopoeia regarding an evaluation result for a user's action according to any one of the Configurations 7 through 10, the measurement result may contain information from a measurement of a state of an operation object operated by the user.

This enables evaluation of the user's action to be based on the state of the object operated by the user.

### (Configuration 12)

The program for presenting an onomatopoeia regarding an evaluation result for a user's action according to any one of the Configurations 7 through 11 may further cause the computer to execute an evaluation process which evaluates the user's action based on the measurement result regarding the event caused by user's action measured by the measuring device.

This allows the program for presenting an onomatopoeia to perform evaluation of actions.

It should be noted here that computer readable memory media containing the program for presenting an onomatopoeia regarding an evaluation result for a user's action according to any one of the Configurations 7 through 11 is also an embodiment of the present teaching.

### (Configuration 13)

A method for presenting an onomatopoeia regarding an evaluation result for a user's action as an embodiment of the present teaching includes: a measurement result inputting step; an onomatopoeia data obtaining step; and an onomatopoeia outputting step.

The measurement result inputting step inputs measurement results measured by measuring devices regarding events arising from a user's action.

The onomatopoeia data obtaining step obtains onomatopoeia data which indicates an onomatopoeia corresponding to an evaluation of the user's action based on the measurement results inputted in the measurement result input step.

The onomatopoeia outputting step outputs the onomatopoeia data obtained by the onomatopoeia data obtaining step to a notification device capable of making a notification to the user in a form of audio or text, thereby causing the notification device to present an onomatopoeia which corresponds to the evaluation of the user's action in the form of audio or text while the user is carrying out the user's action.

The method for presenting an onomatopoeia regarding an evaluation result for a user's action according to the present embodiment is capable of presenting an evaluation of an action to the user under the state in which the user who is making the action is carrying out the action. This allows the user to make use of the evaluation contents as a feedback while continuing user's action.

### (Configuration 14)

In the method for presenting an onomatopoeia regarding an evaluation result for a user's action according to the above-described Configuration 13, there may be an arrangement that the onomatopoeia data obtaining step obtains onomatopoeia data which indicates one onomatopoeia for a plurality of evaluation items that was obtained by making one evaluation for the plurality of evaluation items.

If onomatopoeia is not utilized, evaluations regarding the plurality of evaluation items must be explained in the form of text for example, and the user must spend a long time to grasp the content. In other words, it is difficult for him/her to read and understand a long explanation while continuing some other actions. However, onomatopoeia can express evaluations on a plurality of evaluation items concisely, so the user can grasp the evaluation result easily.

### (Configuration 15)

In the method for presenting an onomatopoeia regarding an evaluation result for a user's action according to the Configuration 13 or 14, there may be an arrangement that the onomatopoeia data obtaining step obtains onomatopoeia data which is representing a multi-graded evaluation regarding one evaluation item that was obtained by making the multi-graded evaluation regarding the one evaluation item.

If onomatopoeia is not utilized, text for example, must be used in order to express evaluation contents evaluated in a multi-graded scale regarding one evaluation item, and the user must spend a long time to grasp the contents. In other words, it is difficult for him/her to read and understand a long explanation while continuing some other actions. However, onomatopoeia can express multi-graded evaluations for one evaluation item concisely, so the user can grasp the evaluation result easily.

### (Configuration 16)

In the method for presenting an onomatopoeia regarding an evaluation result for a user's action according to any one of the Configurations 13 through 15, there may be an arrangement that the onomatopoeia data obtained by the onomatopoeia data obtaining step is provided, as the evaluation of the user's action, by comparison of the measurement result or a calculated value based on the measurement result with a predetermined threshold value.

By comparing a measurement result or the like with a predetermined threshold value it is possible to obtain an evaluation result of the user's motion.

### (Configuration 17)

In the method for presenting an onomatopoeia regarding an evaluation result for a user's action according to any one of the Configurations 13 through 16, the measurement result may contain information from a measurement of a state of an operation object operated by the user.

This enables evaluation of the user's action to be based on the state of the object operated by the user.

### (Configuration 18)

The method for presenting an onomatopoeia regarding an evaluation result for a user's action according to any one of the Configurations 13 through 17 may further include an evaluation step which evaluates the user's action based on the measurement result regarding the event caused by user's action measured by the measuring device.

This allows the method for presenting an onomatopoeia to perform evaluation of actions.

It should be noted here that although the onomatopoeia outputting section causes the notification device to present an onomatopoeia while the user is being involved in his/her action, it is not necessary for a device for presenting an onomatopoeia regarding an evaluation result for a user's action according to the present teaching to include means for detecting whether or not the user is making an action. Whichever of the arrangements, i.e., including or not including a detecting section for detecting whether or not the user is making an action, is acceptable. For example, in cases where the "user's action" refers to an operation of a specific component by the user, then there may be employed a detecting section which is provided by a sensor for detecting an inputting operation to the component, or a sensor for detecting an operation of the component. For example, in cases where the "user's action" refers to an operation of a vehicle by the user, there may be employed the detection section which is provided by a sensor for detecting an amount of accelerator operation, an amount of brake operation or an amount of handlebar operation. As described, the detecting section may be provided by a sensor for detecting a physical quantity which is subject to a change in state of a component or a vehicle arising from the user's action.

It should be noted here that in cases where a device for presenting an onomatopoeia regarding an evaluation result for a user's action according to the present teaching includes the detecting section for detecting whether or not the user is making an action, the onomatopoeia outputting section should be controlled so that the onomatopoeia is outputted while the detecting section is detecting the user's action. In cases where the device for presenting an onomatopoeia does not include the detecting section, the device may be configured so that the sequence from the timing at which measurement information is inputted to the timing at which an onomatopoeia is outputted from the onomatopoeia outputting section will be completed in a short time. For example, a CPU which has high processing capabilities may be employed to complete the output of the onomatopoeia while the user is involved in user's action.

Since the device for presenting an onomatopoeia regarding an evaluation result for a user's action according to the present teaching presents the user with an onomatopoeia while the user is in action, it is possible with the present teaching to allow the user to grasp the onomatopoeia in real time. The term real time herein means a timing long enough to allow presentation of an onomatopoeia while the user is making an action, before that particular action is finished; the term is not limited to an instantaneous timing.

It should be noted here that the timing at which the onomatopoeia outputting section outputs an onomatopoeia is not limited to a specific time span in which the user is making an action. There may be an arrangement that the onomatopoeia outputting section starts the output of onomatopoeia while the user is making the action, and continues the output of onomatopoeia after the user has completed his/her action. In other words, there may be an arrangement that the onomatopoeia is outputted while the user is making an action and after he/she has completed the action.

It should be noted here that at its minimum configuration, the device for presenting an onomatopoeia regarding an evaluation result for a user's action according to the present teaching should include a measurement result inputting section, an onomatopoeia data obtaining section and an onomatopoeia outputting section. The device for presenting an onomatopoeia may further include an evaluation section, or an evaluation section may be provided in an external apparatus. Also, the device for presenting an onomatopoeia may include a measuring device.

It should be noted here that an "event arising from a user's action" includes a body movement of the user, a behavior of a machine based on the user's operation, a behavior of a vehicle based on the user's operation, etc. Also, the event arising from the user's action includes biological information such as stress, body temperature and heart rate, of the user.

It should be noted here that results of comparison with threshold values under various criteria are utilized for evaluation of the user's action. Quickness, accuracy and smoothness are examples of usable criteria. A criterion may be provided by one criterion, or a plurality of criteria may be used to make a comprehensive evaluation.

In addition to the above-described mode of embodiments, the present teaching has a mode of embodiments as a skill improvement promoting apparatus. The skill improvement promoting apparatus according to the present mode of embodiment is an apparatus which presents a training result to a user who is exercising in a training, and includes: a measurement section for measurement of an event arising from an action of the user who performed a training; an evaluation section for evaluating an action of the user who performed the training, based on a measurement result of the measurement section; a data obtaining section for obtaining onomatopoeia data corresponding to the evaluation made by the evaluation section; and an outputting section for outputting the onomatopoeia data obtained by the data obtaining section thereby presenting the evaluation of the action to the user who made the training.

The apparatus is capable of presenting the user, who makes a training, with an evaluation of the training under a state in which the user is engaged in the training. This allows the user to make use of the evaluation contents as a feedback while continuing his/her training.

Also, in the skill improvement promoting apparatus according to the present mode of embodiment, the evaluation section makes one evaluation for a plurality of evaluation items, and the data obtaining section obtains one onomatopoeia data for the plurality of evaluation items.

Also, in the skill improvement promoting apparatus according to the present mode of embodiment, the evaluation section may make a multi-graded evaluation for one evaluation item, and the data obtaining section may obtain an onomatopoeia data which represents the multi-graded evaluation.

### BRIEF DESCRIPTION OF DRAWINGS

Fig. 1 is a drawing which shows a definition of onomatopoeia in the present embodiment.
Fig. 2 shows a motorcycle and various sensors according to the present embodiment
Fig. 3 is a block diagram which shows a riding evaluation apparatus according to the present embodiment.
Fig. 4 shows loudspeakers and a display mounted on a helmet.
Fig. 5 shows an example of data stored in a measurement information database.
Fig. 6 shows an example of data stored in an onomatopoeia database.
Fig. 7 shows an example of tables stored in a judgment criteria database.
Fig. 8 shows an example of tables stored in a judgment criteria database.
Fig. 9 shows an example of tables stored in a judgment criteria database.
Fig. 10 shows an example of tables stored in a judgment criteria database.
Fig. 11 shows an example in which one onomatopoeia is assigned to evaluation contents related to a plurality of evaluation items.
Fig. 12 is a flow chart which shows processing contents of the riding evaluation apparatus.
Fig. 13 is a flow chart which shows processing contents of the riding evaluation apparatus.
Fig. 14 shows a configuration example of the riding evaluation apparatus.
Fig. 15 shows a configuration example of the riding evaluation apparatus.

### DESCRIPTION OF EMBODIMENTS

Human activities such as sports, operating a vehicle or a machine involves motions and actions of a person. In performing these activities, the person who is making actions is interested in the contents of his/her own motions/actions. A person who made an action is interested in a result caused by his/her own action. A person who made an action can learn contents of his/her activities by receiving evaluations regarding results of his/her own motion/action.

A person who made a motion/action as described above checks evaluations given on his/her action and determines whether or not the action was good. A person who made an action can become confident that there was no problem in his/her action if an evaluation given to the action is good. If an evaluation given to the action is bad, the person who made the action makes corrections to his/her action. As described above, evaluation of the action is information of interest for a person who makes motions/actions.

While evaluation of the action is information of interest for a person who makes actions as described above, evaluation of the action is also information of interest for a person who makes training. A person who makes training makes an action first of all. Next, the person checks evaluations given on the action and determines whether or not the action was good. If the evaluation of the action is good, then the person continues to practice the action, whereas if the evaluation of the action is bad, then he/she tries to correct the action. As described, a person who makes training needs to obtain an evaluation of the action in some form.

In a training of golf, an end of a swing is an end of an action. Therefore, when practicing a golf swing, it is possible to make a swing and then spend a long time to check an evaluation. For example, it is possible to use a camera or a video recorder to capture a swing action, and then take time to review the recorded images after the swing. After reviewing the captured images of the swing, the person may resume the training of swing.

On the contrary, in a training of long distance running, an action is continued and therefore it is difficult to check evaluation of the action while the running is continued. If the action is stopped each time when checking the evaluation of the action, it would be impossible to accomplish the purpose of the running training.

In a training of motorcycle operation, it will be convenient if evaluation of riding skills could be checked while the motorcycle operation is continued. It would be too much hustle if the motorcycle had to be stopped each time an acceleration or a cornering has been made, in order to check evaluation of the riding skill.

As a matter of fact, there are not as many options for presenting information to a motorcycle rider as those for an automobile driver. One reason for this is that a motorcycle rider wears a helmet. Even if there is a monitor mounted near a motorcycle handlebar, it is difficult for the rider with a helmet to see the monitor.

In comparison with an automobile driver, a motorcycle rider has to make a wider varieties of control operations and the operations must be made more frequently. Further, a motorcycle rider often must make more than one operations simultaneously. Therefore, it is difficult to let the rider know of information by means of image even if the motorcycle has a monitor screen mounted thereon.

In an environment where a user is not hustling in a time-wise or task-wise manner, it is possible to present the user with a training result by presenting text or data. In an environment where a user is hustling in a time-wise or a task-wise manner, however, it was difficult to present the user with the same amount of information. The inventors of the present teaching have an idea of utilizing onomatopoeia in providing a user with information as a means for checking evaluation result while training-related actions are continued.

Use of onomatopoeia in providing information offers the following advantages: first, evaluation contents relating to a plurality of evaluation items can be expressed in one onomatopoeia; second, an evaluation score in a multi-graded evaluation system regarding one evaluation item can be expressed in onomatopoeia.

The inventors of the present teaching came to an idea that use of onomatopoeia is effective in training systems which provide a user with a state of an action grasped in a plurality of evaluation items or a state of an action evaluated in a multi-graded scale in one evaluation item. The inventors came to the idea that by utilizing a training system which makes use of onomatopoeia, it becomes possible to provide a user with an evaluation in a concise manner with a short word.

Also, in an environment where a person who makes a motion/action is not hustling in a time-wise or task-wise manner, it is possible to present the person with a result of the action by presenting text or data. In an environment where the person who makes the action is hustling in a time-wise or task-wise manner, however, it was difficult to present the user with the same amount of information. The inventors of the present teaching came to the idea of utilizing onomatopoeia in providing information to a person who is making an action, as a means for him/her to check an evaluation result while continuing various kind of actions.

The inventors of the present teaching came to an idea that use of onomatopoeia is effective in systems for informing a person who is making an action, about a state of his/her action grasped in a plurality of evaluation items or a state of his/her action evaluated in a multi-graded scale in one evaluation item. Thus, the inventors came to the idea that by utilizing a system which makes use of onomatopoeia, it becomes possible to give a person who is making an action a concise evaluation with a short word.

Hereinafter, description will be made using a riding evaluation apparatus as one mode of embodiment of the device for presenting an onomatopoeia regarding an evaluation result for a user's action according to the present teaching.

In the following mode of embodiment, "measurement information inputting section" corresponds to "measurement result inputting section" according to the present teaching. In the following mode of embodiment, "onomatopoeia obtaining section" corresponds to "onomatopoeia data obtaining section" according to the present teaching. In the following mode of embodiment, "outputting section" corresponds to "onomatopoeia outputting section" according to the present teaching. In the following mode of embodiment, "loudspeaker" and "display" are examples of "notification device" according to the present teaching.

Hereinafter, description will be made for a mode of embodiment of the device for presenting an onomatopoeia regarding an evaluation result for a user's action according to the present teaching, using a riding evaluation apparatus which is mounted on a motorcycle as an example.

### [1. Overview of Riding Evaluation Apparatus]

The riding evaluation apparatus according to the present embodiment is mounted on a motorcycle. The motorcycle rider makes actions for performing a start, an acceleration, a deceleration, a turning, etc., thereby operating the motorcycle. The riding evaluation apparatus evaluates these various actions made by the rider, and obtains onomatopoeias corresponding to evaluation contents. The motorcycle provides the rider with these onomatopoeias which are obtained by the riding evaluation apparatus, as riding evaluations to operations performed by the rider who is operating the motorcycle. The rider obtains information, expressed in onomatopoeia, regarding the riding evaluation made to the rider's operation while the rider is operating the motorcycle and continuing his ride.

### [2. Onomatopoeia]

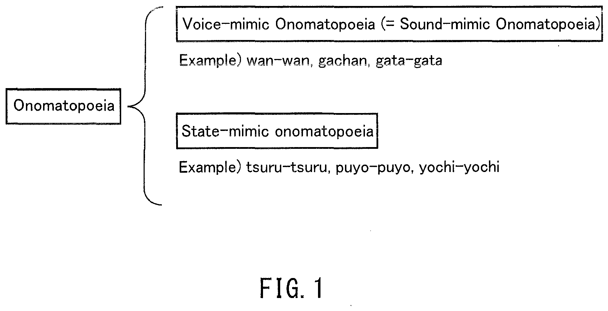

Definitions of terms to be used in the present Description will be explained with reference to Fig. 1. A voice-mimic onomatopoeia (or sound-mimic onomatopoeia) is a mimic word of a sound made by an animal or a noise from an object, etc. Examples of the voice-mimic onomatopoeia include: "wan-wan" ("wan-wan" in the Japanese sound, and "bow-wow" in the English sound, voice-mimic onomatopoeias expressing a bark of a dog); "gacyan" ("gacyan" in the Japanese sound, and "clash" in the English sound, voice-mimic onomatopoeias expressing a noise when a piece of pottery, for example, is broken); "gata-gata" (gata-gata" in the Japanese sound, and "bonk" in the English sound, voice-mimic onomatopoeias expressing a noise from a rickety desk whose legs are not equal in length).

A state-mimic onomatopoeia is a mimic word expressing a state of an object or an action of a person, etc. Examples of the state-mimic onomatopoeia include: "tsuru-tsuru" ("tsuru-tsuru" in the Japanese sound, a state-mimic onomatopoeia expressing a smooth state of a surface); "puyo-puyo" ("puyo-puyo" in the Japanese sound, a state-mimic onomatopoeia expressing a soft and elastic state); and "yochi-yochi" ("yochi-yochi" in the Japanese sound, a state-mimic onomatopoeia expressing state of a baby slowly crawling forward).

Other examples of the state-mimic onomatopoeia include: "soro-soro" ("soro-soro" in the Japanese sound and "slo-slo-slo" in the English sound, state-mimic onomatopoeias expressing a state that a speed/action is slow); "viewn" ("viewn" in the Japanese sound and "zooooom" in the English sound, state-mimic onomatopoeias expressing a state that a speed/action is fast); "cueeen" ("cueeen" in the Japanese sound and "zoooooooom" in the English sound, state-mimic onomatopoeias expressing a state of moving fast and a bracing feeling as well); and "fla-fla" ("fla-fla" in the Japanese sound and "diz-diz-diz" in the English sound, state-mimic onomatopoeias expressing a state of moving in a staggering manner). The term onomatopoeia covers both voice-mimic onomatopoeia and slate-mimic onomatopoeia.

Onomatopoeia is used very frequently in Japanese but onomatopoeia is used also in English. For example, "doub-doub" in Japanese ("doub-doub" in the Japanese sound, a state-mimic onomatopoeia expressing a state that a size of a garment, for example, is too big) has an equivalent English onomatopoeia of "baggy", etc.; and "beee!" in Japanese ("beee!" in the Japanese sound, a voice-mimic onomatopoeia expressing a sound from a buzzer and the like) has an equivalent English onomatopoeia of "beep", etc. Also, "boink !!", "boing !!", "whoosh !!", etc. are used as onomatopoeias expressing states of jumping, hopping, leaping.

### [3. Overall Configuration of the Motorcycle]

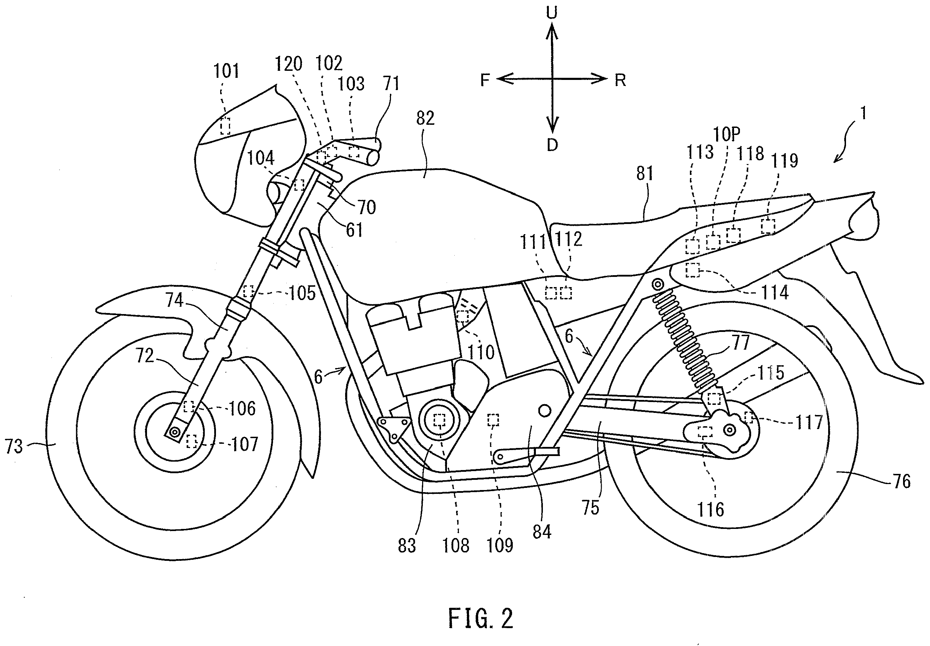

Description will now cover a configuration of the motorcycle 1 according to the present embodiment, with reference to Fig. 2. In the present embodiment, the motorcycle 1 is provided by a naked-type motorcycle as shown in Fig. 2. However, the riding evaluation apparatus according to the present embodiment is applicable to any type of motorcycles including racer type, American type, etc. In addition, the riding evaluation apparatus according to the present embodiment is also applicable to motor scooters.

In the following description, the terms left and right, front and rear of the motorcycle 1 are left, right, front and rear directions as seen by the rider sitting in a seat 81 of the motorcycle 1. In Fig. 2, Arrow F indicates a forward direction of the motorcycle 1, Arrow R indicates a rearward direction of the motorcycle 1, Arrow U indicates an upward direction of the motorcycle 1, and Arrow D indicates a downward direction of the motorcycle 1.

The motorcycle 1 includes a body frame 6. The body frame 6 includes a head pipe 61. The head pipe 61 is disposed at a front of the motorcycle body. A steering shaft 70 is inserted into the head pipe 61 rotatably in the left-right direction. On top of the steering shaft 70, a handlebar 71 is fixed. The handlebar 71 is rotatable in the left-right direction together with the steering shaft 70.

To the steering shaft 70, front forks 72 are fastened on via brackets. Each of the front fork 72 has a lower end, where a front wheel 73 is attached rotatably. As the rider operates the handlebar 71 in the left-right direction, the front wheel 73 is turned to the left-right direction. Each of the front fork 72 is provided with a front suspension 74.

A seat 81 is provided at a place on a slightly rear side from a middle point in the fore-aft direction of the motorcycle body. The seat 81 is supported by the body frame 6. In front of the seat 81 is a fuel tank 82. The fuel tank 82 is supported by the body frame 6.

Below the fuel tank 82 is an engine 83. The engine 83 is supported by the body frame 6. A rear arm 75 is provided at a rearward place from the engine 83. The rear arm 75 is supported pivotably in an up-down direction around a pivot shaft provided in the body frame 6. The rear arm 75 has its rear portion, where a rear wheel 76 is provided rotatably. A rear suspension 77 is provided between the rear wheel 76 and the body frame 6.

A transmission apparatus 84 is provided behind the engine 83. The transmission apparatus 84 is supported by the body frame 6. An output from the engine 83 is transmitted to the rear wheel 76 via the transmission apparatus 84 and a chain.

### [4. Sensors Mounted on the Motorcycle]

As shown in Fig. 2, the motorcycle 1 according to the present embodiment has a large number of sensors 101 through 120 mounted thereon. An image sensor 101 is in a front portion of the motorcycle body. The image sensor 101 is capable of taking images ahead of the vehicle, and may be provided by, e.g., a CCD (Charge Coupled Device) image sensor or a CMOS (Complementary MOS) image sensor. A sound sensor 102 is provided by a microphone which is mounted near the handlebar 71 for capturing sound from a surrounding environment or a voice of the rider. The image sensor 101 and the sound sensor 102 may be mounted elsewhere.

A clutch operation sensor 103 is placed near the handlebar 71, and measures an amount of displacement of a clutch lever (not illustrated) operated by the rider. The clutch operation sensor 103 may be provided by a potentiometer, a linear encoder or the like. A steering angle sensor 104 is placed near the steering shaft 70 and measures a rotating angle of the steering shaft 70. The steering angle sensor 104 may be provided by, e.g., a potentiometer.

A front suspension stroke sensor 105 is placed near the front suspension 74, and measures an amount of stroke of the front suspension 74. The front suspension stroke sensor 105 may be provided by, e.g., a linear encoder. A front wheel speed sensor 106 is placed near the front wheel 73, and measures a rotation speed of the front wheel 73. The front wheel speed sensor 106 may be provided by, e.g., a rotary encoder. A front wheel braking pressure sensor 107 is placed near a brake (not illustrated) provided for the front wheel 73, and measures a braking pressure of the front wheel brake. The front wheel braking pressure sensor 107 may be provided by, e.g., a hydraulic sensor.

An engine number-of-revolution sensor 108 is placed inside the engine 83, and measures the number of revolutions of the engine 83. The engine number-of-revolution sensor 108 is disposed near a shaft, such as the crank shaft (not illustrated), inside the engine 83, and may be provided by, e.g., a rotary encoder. A gear position sensor 109 is placed inside the transmission apparatus 84, and detects positions of a transmission gear. The gear position sensor 109 may be provided by, e.g., a linear encoder. A throttle opening-rate sensor 110 is placed near an air-intake pipe connected to the engine 83. The throttle opening-rate sensor 110 may be provided by, e.g., a potentiometer.

A three-axis acceleration sensor 111 is placed below the seat 81, and measures acceleration of the motorcycle body in 3 axes (up-down direction, fore-aft direction and left-right direction). The three-axis acceleration sensor 111 may be provided by, e.g., a piezoresistive three-axis acceleration sensor. A three-axis angular velocity sensor 112 is placed below the seat 81, and measures angular velocity of the motorcycle body about 3 axes (around up-down direction, around fore-aft direction and around left-right direction). The three-axis angular velocity sensor 112 may be provided by, e.g., a gyro sensor.

An orientation sensor 113 is placed below the seat 81, and measures orientation. The orientation sensor 113 may be provided by, e.g., a magnetic sensor. A position information sensor 114 is placed below the seat 81, and obtains position information of the motorcycle 1. The position information sensor 114 may be provided by a GPS (Global Positioning System) reception apparatus.

A rear suspension stroke sensor 115 is placed near the rear suspension 77, and measures an amount of stroke of the rear suspension 77. The rear suspension stroke sensor 115 may be provided by, e.g., a linear encoder. A rear wheel speed sensor 116 is placed near the rear wheel 76, and measures a rotation speed of the rear wheel 76. The rear wheel speed sensor 116 may be provided by, e.g., a rotary encoder. A rear wheel braking pressure sensor 117 is placed near a brake (not illustrated) provided for the rear wheel 76, and measures a braking pressure of the rear wheel brake. The rear wheel braking pressure sensor 117 may be provided by, e.g., a hydraulic sensor.

A temperature sensor 118 is placed below the seat 81, and measures ambient temperatures. An FM receiver 119 receives FM (Frequency Modulation) multiplex broadcast, and obtains text information such as weather forecast, traffic information, etc. A front light switch sensor 120 is placed near the handlebar 71, and measures ON/OFF switching operation for a front light.

### [5. Configuration of the Riding Evaluation Apparatus]

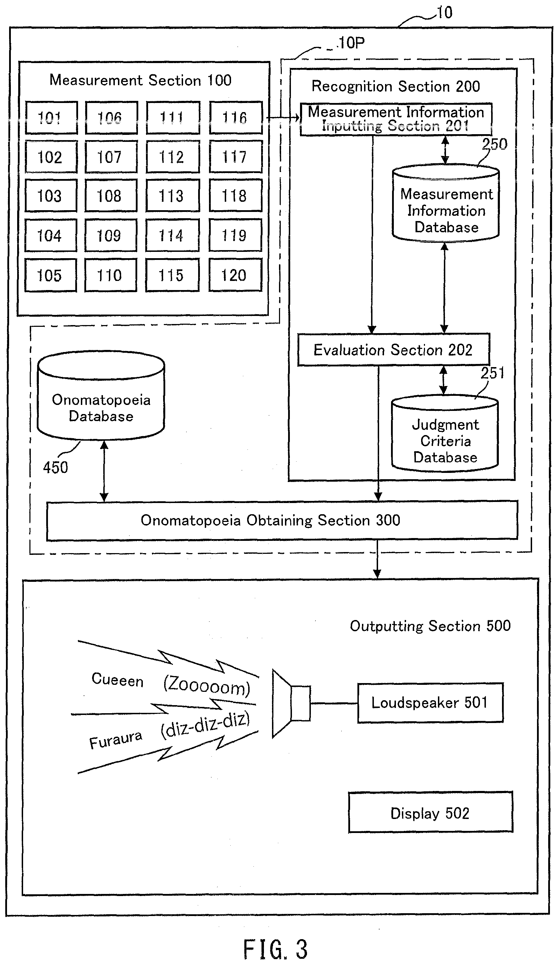

Next, a configuration of the riding evaluation apparatus 10 mounted on the motorcycle 1 will be described with reference to Fig. 3. The riding evaluation apparatus 10 according to the present embodiment includes a measurement section 100, a riding evaluation module 10P, and an outputting section 500. The riding evaluation module 10P includes a recognition section 200, an onomatopoeia obtaining section 300 and an onomatopoeia database 450.

The measurement section 100 has the earlier described sensors 101 through 120. In the present embodiment, the measurement section 100 has twenty kinds of sensors 101 through 120. However, this is an example. The measurement section may have selected one of these sensors, or it may further have other sensors. For example, it may have an infrared sensor or a stereo camera. Further, it may have sensors for measuring the rider's biological information (e.g., blood flow sensor and perspiration sensor). The measurement section 100 measures events arising from the rider's actions.

The recognition section 200 is a processing section which evaluates the rider's riding based on the information measured by the measurement section 100. The recognition section 200 includes a measurement information inputting section 201, an evaluation section 202, a measurement information database 250 and a judgment criteria database 251.

To the measurement information inputting section 201, information measured in the measurement section 100 is inputted. In other words, information measured by the various sensors 101 through 120 is inputted. The measurement information inputting section 201 stores the inputted measurement information in the measurement information database 250. Details of the measurement information database 250 will be described later. The evaluation section 202 evaluates the rider's riding based on measurement information stored in the measurement information database 250 and judgment criteria tables stored in the judgment criteria database 251. The evaluation section 202 selects an onomatopoeia which represents the evaluation of the rider's riding. Methods of evaluation by the evaluation section 202 will be detailed later.

The onomatopoeia obtaining section 300 makes an access to the onomatopoeia database 450 to obtain data which corresponds to the onomatopoeia selected in the evaluation section 202. The onomatopoeia obtaining section 300 outputs the obtained onomatopoeia data to the outputting section 500. The outputting section 500 outputs the onomatopoeia data, thereby notifying the rider of the riding evaluation.

The outputting section 500 has a loudspeaker 501 and a display 502. In cases where audio data is used as the onomatopoeia data, the loudspeaker 501 is used as the outputting section 500. In cases where text data or image data is used as the onomatopoeia data, the display 502 is used as the outputting section 500. Onomatopoeia in text data is recorded as character information. Onomatopoeia in image data is recorded as image information.

"The riding evaluation module 10P" in the present embodiment includes the function of the "device for presenting an onomatopoeia regarding an evaluation result for a user's action" according to the present teaching. The "measurement result inputting section" included in the "device for presenting an onomatopoeia regarding an evaluation result for a user's action" according to the present teaching corresponds to the "measurement information inputting section 201" included in the "riding evaluation module 10P". The "onomatopoeia data obtaining section" included in the "device for presenting an onomatopoeia regarding an evaluation result for a user's action" according to the present teaching corresponds to the "onomatopoeia obtaining section 300" included in the "riding evaluation module 10P". The "onomatopoeia outputting section" included in the "device for presenting an onomatopoeia regarding an evaluation result for a user's action" according to the present teaching is included in the "onomatopoeia obtaining section 300" of the "riding evaluation module 10P". The "notification device" included in the "device for presenting an onomatopoeia regarding an evaluation result for a user's action" according to the present teaching corresponds to the "outputting section 500".

The "device for presenting an onomatopoeia regarding an evaluation result for a user's action" according to the present teaching may contain the measurement information database 250 or have the measurement information database 250 outside of the apparatus. The "device for presenting an onomatopoeia regarding an evaluation result for a user's action" according to the present teaching may contain the evaluation section 202 or make use of the evaluation section 202 located outside of the apparatus. For example, the evaluation section may be located in a server which is connected via a network. The "device for presenting an onomatopoeia regarding an evaluation result for a user's action" according to the present teaching may contain the onomatopoeia database 450 or have the onomatopoeia database 450 outside of the apparatus.

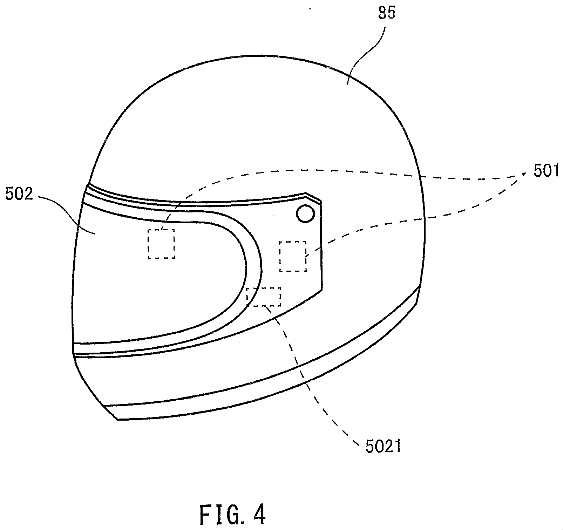

Fig. 4 shows a helmet 85 which is worn by the rider when riding on the motorcycle 1. The helmet 85 is provided with a left and a right loudspeaker 501, 501. The rider who wears the helmet 85 and is operating the motorcycle 1 can check onomatopoeia from the loudspeakers 501, 501 by sound.

The helmet 85 has a face shield, part of which is used as the display 502. The helmet 85 is provided with an AR (Augmented Reality) projector 5021, which outputs images on the display 502. The rider who wears the helmet 85 and is operating the motorcycle 1 can check onomatopoeia which is outputted in the display 502 by image.

In the present embodiment, loudspeakers for outputting onomatopoeia are provided in a helmet worn by the rider; however, the loudspeakers may be placed at different places. For example, the loudspeakers may be on a front cowl or near the handlebar.

In the present embodiment, the face shield of a helmet which is worn by the rider is used as a display for displaying onomatopoeia; however, the display is not limited to this. In all cases, the rider should be able to see the onomatopoeia easily, and to this ends it is desirable that the display is disposed in a transparent or translucent member disposed ahead of the rider's eyes.

Referring to Fig. 3 again, in the present embodiment, the measurement information inputting section 201, the evaluation section 202 and the onomatopoeia obtaining section 300 are implemented by a CPU (Central Processing Unit), a memory and a piece of software which operates on the CPU while utilizing the memory as a work area. Also, in the present embodiment, parts such as the CPU, the work memory, a ROM, and others which implement the measurement information inputting section 201, the evaluation section 202 and the onomatopoeia obtaining section 300; and parts such as a memory and others which store the measurement information database 250, the judgment criteria database 251 and the onomatopoeia database 450, are disposed on one or a plurality of substrates in the form of the riding evaluation module 10P. As shown in Fig. 2, in the present embodiment, the riding evaluation module 10P is disposed below the seat 81.

Alternatively, a part or all of the measurement information inputting section 201, the evaluation section 202 and the onomatopoeia obtaining section 300 may be provided by a piece of hardware. In this case, too, parts such as the hardware, and others which implement the measurement information inputting section 201, the evaluation section 202 and the onomatopoeia obtaining section 300; and parts such as a memory and others which store the measurement information database 250, the judgment criteria database 251 and the onomatopoeia database 450, are disposed on one or a plurality of substrates in the form of the riding evaluation module 10P.

### [6. Measurement Information Database]

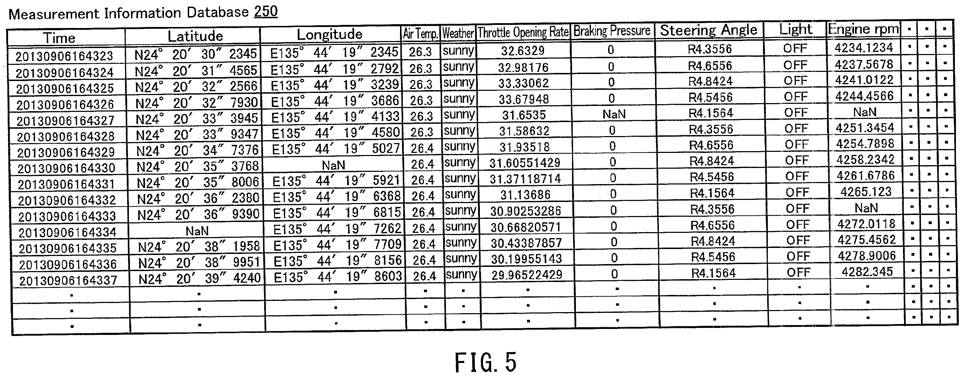

Referring to Fig. 5, the measurement information database 250 will be described. The measurement information inputting section 201 stores measurement information inputted from the measurement section 100, in other words, measurement information inputted from the various sensors 101 through 120, in the measurement information database 250. As shown in Fig. 5, data stored in the measurement information database 250 is kept as a record with time-point information as key information. In other words, measurement information obtained at each time-point is related with time-point information and stored in the measurement information database 250. The time-point information is obtained from a timer (not illustrated) which is provided in the riding evaluation module 10P.

Latitude information and longitude information are measurement information obtained by the position information sensor 114. Air temperature information is measurement information obtained by the temperature sensor 118. Weather information is obtained from text information received by the FM receiver 119. Throttle opening-rate information is measurement information obtained by the throttle opening-rate sensor 110. Braking pressure sensor information is measurement information obtained by the front wheel braking pressure sensor 107. Steering angle information is measurement information obtained by the steering angle sensor 104. Light information is measurement information obtained by the front light switch sensor 120. Engine number-of-revolution information is measurement information obtained by the engine number-of-revolution sensor 108. Although Fig. 5 shows information measured by a limited number of sensors 101 through 120, measurement information obtained by all of sensors 101 through 120 is related with the time-point information and stored in the measurement information database 250. In Fig. 5, NaN (Not a Number) is inputted as the measurement information in some fields. This means that measurement information was not obtained from the relevant sensor.

### [7. Onomatopoeia Database]

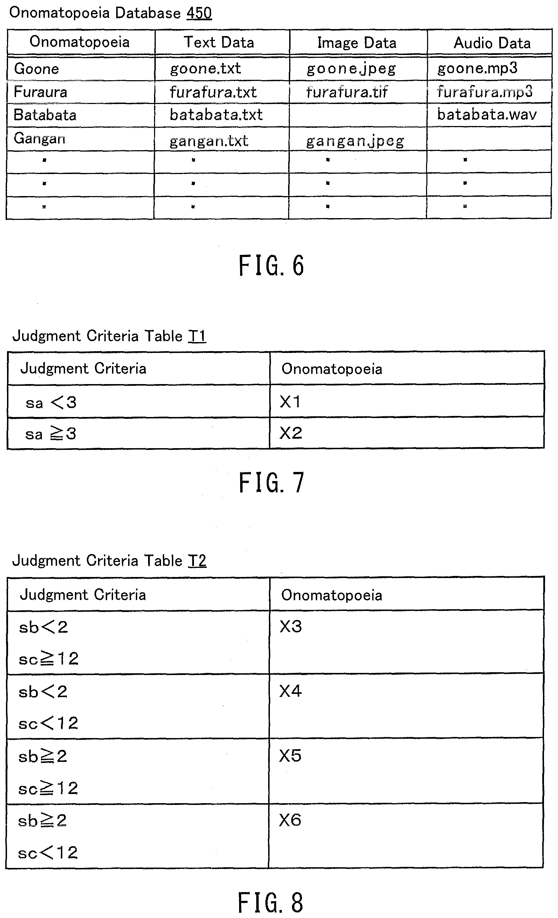

Referring to Fig. 6, the onomatopoeia database 450 will be described. The onomatopoeia database 450 stores onomatopoeia in the form of text data, image data, audio data, etc. In the text data, character strings representing an onomatopoeia are recorded as character codes. In the image data, character strings representing an onomatopoeia are recorded as image information. The image data may be of such a format as JPEG (Joint Photographic Experts Group) and TIFF (Tagged Image File Format). There is no specific limitation, and any available formats may be employed for use. The image data may be provided by video data in the form of, e.g., MPEG. In the audio data, character strings representing an onomatopoeia are recorded as audio information. The audio data may be of such a format such as MP3 (MPEG-1 Audio Layer-3) and AAC (Advanced Audio Coding). There is no specific limitation and any available formats may be employed for use.

For example, if a text data or an image data is stored for an onomatopoeia, the onomatopoeia obtaining section 300 can output the onomatopoeia to the display 502. Also, if an audio data is stored for an onomatopoeia, the onomatopoeia obtaining section 300 can output the onomatopoeia to the loudspeakers 501.

Referring to an example shown in Fig. 6, for an onomatopoeia "goone" ("goone" in the Japanese sound, state-mimic onomatopoeia), a text data (goone. txt) which is a record of a character string "goone" is stored in the onomatopoeia database 450. Also, an image data (goone. jpeg) which is an image record of the character string "goone" and audio data (goone. mp3) which is a record of a sound "goone" are stored in the onomatopoeia database 450.

### [8. Riding Evaluation Method]

Next, description will cover a riding evaluation processing method. As has been described earlier, measurement information measured in the measurement section 100 is stored in the measurement information database 250 by the measurement information inputting section 201. The evaluation section 202 makes reference to the measurement information database 250 and the judgment criteria database 251, to perform a riding evaluation. The evaluation section 202 selects an onomatopoeia which corresponds to the riding evaluation.

For a specific riding evaluation item, the evaluation section 202 performs the riding evaluation based on one piece of measurement information stored in the measurement information database 250. For example, the evaluation section 202 performs a riding evaluation regarding the rider's acceleration operation based on throttle opening-rate information which is measured by the throttle opening-rate sensor 110.

For another specific riding evaluation item, the evaluation section 202 performs the riding evaluation regarding the rider's operation based on plural pieces of measurement information stored in the measurement information database 250. For example, the evaluation section 202 performs a riding evaluation regarding the rider's operation based on information on vehicle speed which is measured by the rear wheel speed sensor 116, and information on angular velocity about the three axes of the motorcycle 1 which is measured by the three-axis angular velocity sensor 112. The information on the vehicle speed is usable for evaluating stability in the riding skills which indicates, among the rider's riding skills, a riding skill regarding stability. Angular velocities about the three axes are information usable in evaluating turnability in the riding skills which indicates, among the rider's riding skills, a riding skill regarding turnability. The evaluation section 202 performs one riding evaluation for two riding evaluation items, i.e., stability as a riding skill regarding the rider's operation, and turnability as a riding skill regarding the rider's operation.

For still another riding evaluation item, the evaluation section 202 performs the riding evaluation regarding the rider's operation using an arithmetically calculated value based on one piece of measurement information stored in the measurement information database 250 (i.e., not based on a raw value contained in the measurement information but based on manipulated information of the measurement information). For example, the evaluation section 202 performs the riding skill evaluation regarding the rider's operation based on acceleration information which is calculated on a basis of speed information measured by the front wheel speed sensor 106.

For still another riding evaluation item, the evaluation section 202 performs the riding evaluation regarding the rider's operation using arithmetically calculated values based on plural pieces of measurement information stored in the measurement information database 250 (i.e., not based on raw values contained in the measurement information but based on manipulated information of the measurement information). For example, the evaluation section 202 performs a riding evaluation regarding the rider's operation based on information about a damping force which is calculated on a basis of an amount of stroke of the front suspension 74 measured by the front suspension stroke sensor 105, and information about a braking force which is calculated on a basis of a front wheel braking pressure measured by the front wheel braking pressure sensor 107. The Information about the damping force is usable for evaluating comfortability regarding the rider's operation. Information regarding a braking force is usable for evaluating a braking skill. The evaluation section 202 performs one riding evaluation for two riding evaluation items, i.e., comfortability and braking skill regarding the rider's operation.

Fig. 7 shows a judgment criteria table T1 stored in the judgment criteria database 251 referred to by the evaluation section 202. By referring to the judgment criteria table T1, the evaluation section 202 performs a riding evaluation for a specific riding evaluation item (hereafter, riding evaluation item A) based on one piece of measurement information. In the criteria table T1, if a piece of measurement information (measured value) sa satisfies the condition sa<3, there is a riding evaluation for the riding evaluation item A, to which an onomatopoeia X1 is assigned. In the criteria table T1, if a piece of measurement information (measured value) sa satisfies the condition sa≥3, there is a riding evaluation for the riding evaluation item A, to which an onomatopoeia X2 is assigned.

Like in the above example, the evaluation section 202 performs a riding evaluation regarding the acceleration operation based on information regarding throttle opening-rate. In this particular case, the riding evaluation item A is an evaluation item regarding acceleration operation, in other words, an evaluation item regarding the stability in the riding skills. As the onomatopoeia X1, "Sue" ("Sue" in Japanese sound, a state-mimic onomatopoeia expressing small acceleration) is assigned. As the onomatopoeia X2, "goone" ("goone" in the Japanese sound, a state-mimic onomatopoeia expressing large acceleration) is assigned. As understood, the onomatopoeia X1 and the onomatopoeia X2 make it possible to express a multi-graded evaluation regarding one riding evaluation item, i.e., the stability in the riding skills.

Fig. 8 shows a judgment criteria table T2 stored in the judgment criteria database 251 referred to by the evaluation section 202. By referring to the judgment criteria table T2, the evaluation section 202 performs riding evaluations for a plurality of riding evaluation items (hereafter, riding evaluation item B and riding evaluation item C) based on plural pieces of measurement information. In the criteria table T2, if one piece of measurement information (measured value) sb and another piece of measurement information (measured value) sc satisfy the following conditions: sb<2 and sc≥12, then there is one riding evaluation for two riding evaluation items (riding evaluation item B and riding evaluation item C), to which an onomatopoeia X3 is assigned. In the criteria table T2, if one piece of measurement information (measured value) sb and another piece of measurement information (measured value) sc satisfy the following conditions: sb<2 and sc<12, then there is one riding evaluation for the two riding evaluation items (riding evaluation item B and riding evaluation item C), to which an onomatopoeia X4 is assigned. Likewise, in the criteria table T2, if one piece of measurement information (measured value) sb and another piece of measurement information (measured value) sc satisfy the following conditions: sb≥2 and sc≥12, then there is one riding evaluation for the two riding evaluation items, to which an onomatopoeia X5 is assigned. Likewise, in the criteria table T2, if one piece of measurement information (measured value) sb and another piece of measurement information (measured value) sc satisfy the following conditions: sb≥2 and sc<12, then there is one riding evaluation for the two riding evaluation items, to which an onomatopoeia X6 is assigned.

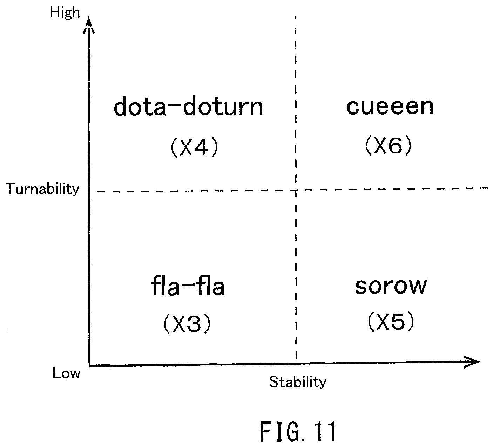

Like in the above example, the evaluation section 202 performs riding evaluations based on information regarding the vehicle speed and information regarding the angular velocity about three axes of the motorcycle 1 which is measured by the three-axis angular velocity sensor 112. In this particular case, the riding evaluation item B is the evaluation item regarding stability in the riding skills, and information regarding the vehicle speed is utilized. The riding evaluation item C is the evaluation item regarding turnability in the riding skills, and angular velocities about the three axes are utilized. As shown in Fig. 11, "fla-fla" ("fla-fla" in the Japanese sound, expressing a low level of stability in riding skills, and a low level of turnability in riding skills) is assigned to the onomatopoeia X3. "Dota-doturn" ("dota-doturn" in the Japanese sound, expressing a low level of stability in riding skills, and a high level of turnability in riding skills) is assigned to the onomatopoeia X4. "Sorow" ("sorow" in the Japanese sound, expressing a high level of stability in riding skills, and a low level of turnability in riding skills) is assigned to the onomatopoeia X5. "Cueeen" ("cueeen" in the Japanese sound, expressing a high level of stability in riding skills, and a high level of turnability in riding skills) is assigned to the onomatopoeia X6. As described, the evaluation section 202 performs one riding evaluation for two riding evaluation items, i.e., stability in the riding skills and turnability in the riding skills, and assigns one onomatopoeia.

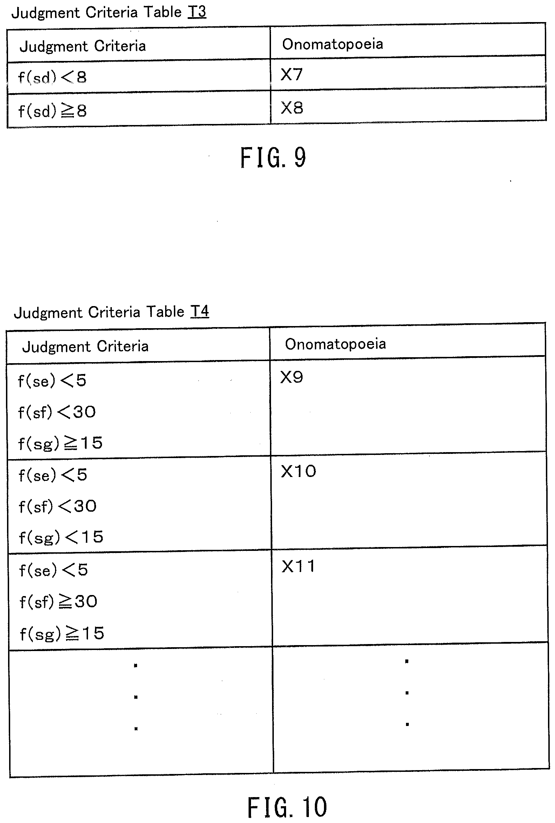

Fig. 9 shows a judgment criteria table T3 stored in the judgment criteria database 251 for reference by the evaluation section 202. By making reference to the judgment criteria table T3, the evaluation section 202 performs a riding evaluation for a specific riding evaluation item (hereafter, riding evaluation item D) based on an arithmetically calculated value based on one piece of measurement information. In the criteria table T3, if an arithmetically calculated value f(sd) based on a piece of measurement information sd satisfies the condition f(sd)<8, there is a riding evaluation for the riding evaluation item D, to which an onomatopoeia X7 is assigned. In the criteria table T3, if an arithmetically calculated value f(sd) based on a piece of measurement information sd satisfies the condition f(sd)≥8, there is a riding evaluation for the riding evaluation item D, to which an onomatopoeia X8 is assigned.

Fig. 10 shows a judgment criteria table T4 stored in the judgment criteria database 251 for reference by the evaluation section 202. By making reference to the judgment criteria table T4, the evaluation section 202 performs a riding evaluation for a plurality of riding evaluation items (hereafter, riding evaluation items E, F and G) based on a plurality of arithmetically calculated values based on plural pieces of measurement information. In the judgment criteria table T4, if arithmetically calculated values f(se), f(sf) and f(sg) which are calculated on the basis of measurement information (measured value) se, measurement information (measured value) sf and measurement information (measured value) sg satisfy the following conditions: f(se)<5, f(st)<30 and f(sg)≥15, then there is one riding evaluation for the three riding evaluation items E, F and G, to which an onomatopoeia X9 is assigned. In the judgment criteria table T4, if arithmetically calculated values f(se), f(sf) and f(sg) which are calculated on the basis of measurement information satisfy the following conditions: f(se)<5, f(sf)<30 and f(sg)<15, then there is one riding evaluation for the three riding evaluation items E, F and G, to which an onomatopoeia X10 is assigned. In the judgment criteria table T4, if arithmetically calculated values f(se), f(sf) and f(sg) which are calculated on the basis of measurement information satisfy the following conditions: f(se)<5, f(sf)≥30 and f(sg)≥15, then there is one riding evaluation for the three riding evaluation items E, F and G, to which an onomatopoeia X11 is assigned. Likewise, the judgment criteria table T4 also lists other value ranges for the arithmetically calculated values f(se), f(sf) and f(sg), and each range has an onomatopoeia assigned.

As described, the evaluation section 202 makes reference to the measurement information database 250 and the judgment criteria database 251, performs a riding evaluation using one or plural pieces of measurement information, or arithmetically calculated values based on one or plural pieces of measurement information, and identifies an onomatopoeia representing contents of the riding evaluation.

### [9. Process Flow of the Riding Evaluation Apparatus]

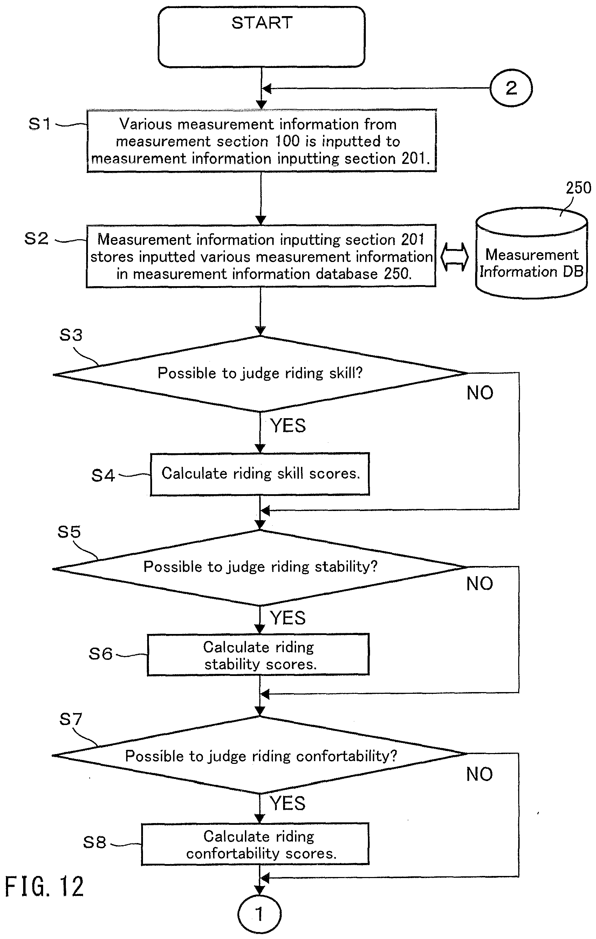

Next, with reference to flow charts in Fig. 12 through Fig. 13, a process flow of the riding evaluation apparatus according to the present embodiment will be described.

Reference is made to Fig. 12. In Step S1, to the measurement information inputting section 201, various kinds of measurement information from the measurement section 100 are inputted. To the measurement information inputting section 201, information measured by the sensors 101 through 120 is inputted.

Next, in Step S2, the measurement information inputting section 201 stores the inputted measurement information in the measurement information database 250. If in Step S1, measurement information was not able to be obtained by the sensor, then NaN (Not a Number) is inputted as the measurement information for that sensor.

Next, in Step S3, the evaluation section 202 determines on whether or not a riding skill judgment is possible. The determination on whether or not a riding skill judgment is possible is made at a predetermined time interval such as 10 seconds. The evaluation section 202 uses a timer (not illustrated) for measurement of time to judge on whether or not a riding skill judgment timing has come. The "riding skill judgment is possible" means that among those riding evaluation items, a set of measurement information is ready for an item regarding a riding skill, and a riding skill judgment can be performed readily.

If it is impossible to make a riding skill judgment (Step S3: NO), the process goes to Step S5. If it is possible to make a riding skill judgment (Step S3: YES), the process goes to Step S4. In Step S4, the evaluation section 202 calculates scores (i.e., values based on measurement information or on arithmetically calculated value(s) from measurement information) for the riding evaluation item(s) regarding the riding skills.

Next, in Step S5, the evaluation section 202 determines on whether or not it is possible to make a riding stability judgment which indicates riding stability of the rider. The determination on whether or not a riding stability judgment is possible is made at a predetermined time interval such as 10 seconds. The "riding stability judgment is possible" means that among those riding evaluation items, a set of measurement information is ready for the items regarding the riding stability, and a riding stability judgment can be performed readily.

If it is impossible to make a riding stability judgment (Step S5: NO), the process goes to Step S7. If it is possible to make a riding stability judgment (Step S5: YES), the process goes to Step S6. In Step S6, the evaluation section 202 calculates scores (i.e., values based on measurement information or on arithmetically calculated values from measurement information) for riding evaluation item(s) regarding riding stability.

Next, in Step S7, the evaluation section 202 determines on whether or not a comfortability judgment is possible. The determination on whether or not a comfortability judgment is possible is made at a predetermined time interval such as 10 seconds. The "comfortability judgment is possible" means that among those riding evaluation items, a set of measurement information is ready for the items regarding the comfortability, and a comfortability judgment can be performed readily.

If it is impossible to make a comfortability judgment (Step S7: NO), the process goes to Step S9. If it is possible to make a comfortability judgment (Step S7: YES), the process goes to Step S8. In Step S8, the evaluation section 202 calculates scores (i.e., values based on measurement information or on arithmetically calculated values from measurement information) for the riding evaluation items regarding comfortability.

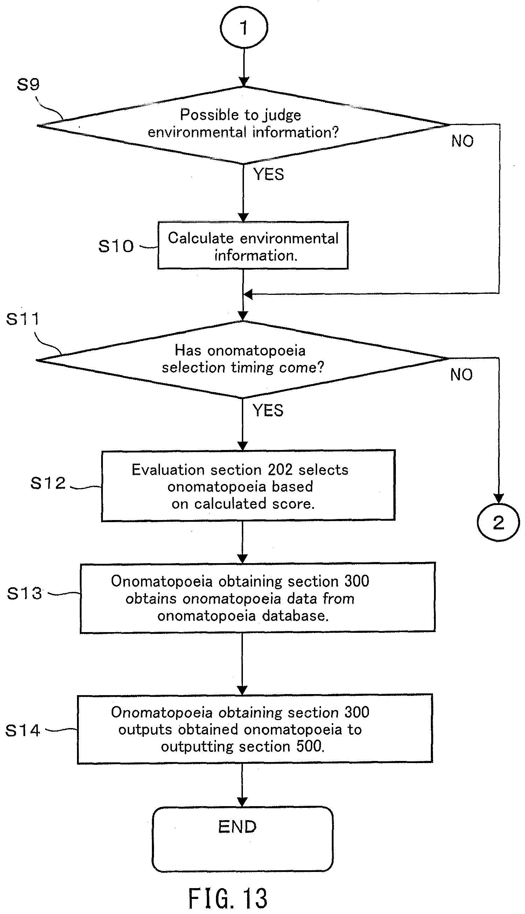

Reference is made to Fig. 13. Next, in Step S9, the evaluation section 202 determines on whether or not an environmental information judgment is possible. The determination on whether or not an environmental information judgment is possible is made at a predetermined time interval such as 10 seconds. The "environmental judgment is possible" means that a set of measurement information is ready for the items regarding the environment, and an environmental judgment can be performed readily. The items regarding the environment are evaluation items of external environment, and an evaluation is performed from different viewpoints from the riding evaluation in the present embodiment.

If it is impossible to make an environmental information judgment (Step S9: NO), the process goes to Step S11. If it is possible to make an environmental information judgment (Step S9: YES), the process goes to Step S10. In Step S10, the evaluation section 202 performs an evaluation regarding the environment and calculates scores (i.e., values based on measurement information or on arithmetically calculated values from measurement information).

Next, in Step S11, the onomatopoeia obtaining section 300 makes a judgment on whether or not an onomatopoeia selection timing has come. The onomatopoeia obtaining section 300 judges that the onomatopoeia selection timing has come if any of Steps S4, S6, S8 and S10 has a score(s) (i.e., measurement information or arithmetically calculated value(s) based on measurement information). In other words, in a case where a set of measurement information is ready and a score(s) is calculated for any of the riding skill judgment, the riding stability judgment, the comfortability judgment and the environment judgment, it is judged that an onomatopoeia selection timing has come.

If an onomatopoeia selection timing has not come (Step S11: NO), the process returns to Step S1, and continues the task of inputting measurement information. In the measurement information database 250, measurement information related to time-point information is accumulated.

If an onomatopoeia selection timing has come (Step S11: YES), the evaluation section 202 selects an onomatopoeia based on the score(s) (i.e., measurement information or arithmetically calculated values based on measurement information) which was calculated in Step S4, S6, S8 or S10 (Step S12). An onomatopoeia is selected through execution of a process such as the one described with reference to Fig. 7 through Fig. 10 for example.

Next, the onomatopoeia obtaining section 300 makes an access to the onomatopoeia database 450 to obtain onomatopoeia data which represents the onomatopoeia selected in Step S12 (Step S13). The onomatopoeia obtaining section 300 outputs the obtained onomatopoeia data to the outputting section 500 (Step S14). As a result, the obtained onomatopoeia is outputted from the loudspeaker 501 for example. In another case, the obtained onomatopoeia is outputted in the display 502.

In the present embodiment, description was made for a case where parts such as the CPU, the work memory, the ROM, and others which implement the measurement information inputting section 201, the evaluation section 202 and the onomatopoeia obtaining section 300, and parts such as the memory and others which store the measurement information database 250, the judgment criteria database 251 and the onomatopoeia database 450 are disposed on one or a plurality of substrates in the form of the riding evaluation module 10P. As shown in Fig. 2, in the present embodiment, the riding evaluation module 10P is disposed below the seat 81. As understood, the "device for presenting an onomatopoeia regarding an evaluation result for a user's action" according to the present teaching is mounted on the motorcycle 1 as a part of the vehicle.

As another embodiment, for example, a mobile information terminal device such as a smartphone may be used as the "riding evaluation module 10P" which is provided by the "device for presenting an onomatopoeia regarding an evaluation result for a user's action" according to the present teaching. In other words, it is possible that the rider brings his/her smartphone and mounts it on the motorcycle 1 to use it as a "riding evaluation module".

The rider can download and install "riding evaluation module software" into his/her smartphone from a server on a network to use his/her smartphone as a "riding evaluation module". As understood, programs for causing a computer to execute the same as the device for presenting an onomatopoeia regarding an evaluation result for a user's action are also included in the present teaching. Also, computer readable non-transitory memory media containing such programs are also included in embodiments of the present teaching.

The sensors 101 through 120 covered in the above-described embodiment are "measuring devices" usable in the present teaching. The "measuring devices" usable in the present teaching may be mounted on the motorcycle 1 like the sensors 101 through 120, or it is not necessary for them to be mounted on the motorcycle 1. For example, the "measuring device" may be provided by various sensors included in a smartwatch. For example, a smartwatch may have an acceleration sensor, an image sensor, a biological information sensor, a GPS reception device, and a temperature sensor, and these may be utilized. As described, the measuring device may be provided by a sensor for detecting a physical quantity which is subject to change with the rider's (user's) action.

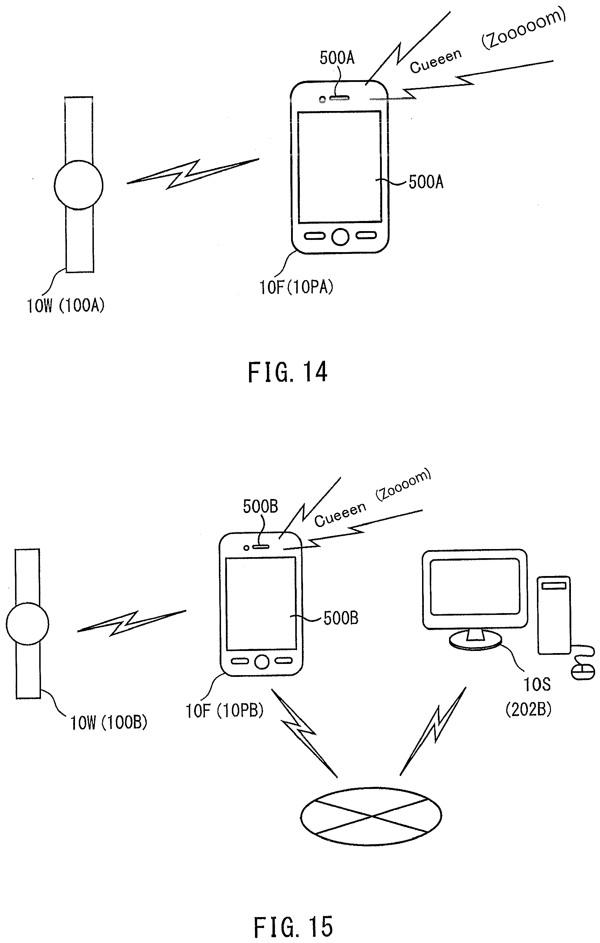

Fig. 14 shows a configuration example of such an embodiment which includes a measuring device 100, the riding evaluation module 10P and the outputting section 500. In Fig. 14, the "measuring device" is provided by a smartwatch 10W, whereas the "riding evaluation module" and the "outputting section" are provided by a smartphone 10F. The rider wears the smartwatch 10W on his/her wrist, thereby using the smartwatch 10W as a measuring device 100A. The rider has the "riding evaluation module software" installed in the smartphone 10F mounted on the vehicle, thereby using the smartphone 10F as the riding evaluation module 10PA. Also, the rider uses a loudspeaker or a display of the smartphone 10F as an outputting section 500A.

The smartphone 10F makes use of its communication means such as Bluetooth, to input various measurement information from the smartwatch 10W which serves as the measuring device 100A. The riding evaluation module 10PA provided by the smartphone 10F obtains onomatopoeia data based on the measurement information. The smartphone 10F outputs the obtained onomatopoeia as audible sound from the loudspeaker of the smartphone 10F. Alternatively, the smartphone 10F outputs the onomatopoeia as visible image in the display of the smartphone 10F.

The smartwatch 10W may also be used as an "outputting section". The smartphone 10F sends the obtained onomatopoeia data to the smartwatch 10W using its communication means such as Bluetooth. The smartwatch 10W outputs the received onomatopoeia data as audible sound from a loudspeaker of the smartwatch 10W or from headphones connected to the smartwatch 10W. Alternatively, the smartwatch 10W outputs the onomatopoeia as visible image in a display of the smartwatch 10W. Also, the smartphone 10F may output the obtained onomatopoeia data through Bluetooth or other communication means, to a loudspeaker or a display mounted on a helmet.

Fig. 15 shows a configuration example of such an embodiment which includes a measuring device 100, the riding evaluation module 10P and the outputting section 500. In Fig. 15, the "measuring device" is provided by a smartwatch 10W, while part of the functions of the "riding evaluation module" and the functions of the "outputting section" are provided by a smartphone 10F. Also, Fig. 15 is a diagram showing an arrangement in which the "evaluation section" is provided by a computer server 10S connected via a network.

The rider wears the smartwatch 10W on his/her wrist, thereby using the smartwatch 10W as a measuring device 100B. The rider has the "riding evaluation module software" installed in the smartphone 10F mounted on the vehicle, thereby using the smartphone 10F as a riding evaluation module 10PB. However, the riding evaluation module 10PB does not have the function of the "evaluation section". The rider uses a loudspeaker or a display of the smartphone 10F as an outputting section 500B. Also, the computer server 10S which is connected via a network is utilized as an evaluation section 202B.

The smartphone 10F makes use of its communication means such as Bluetooth, to input various measurement information from the smartwatch 10W which serves as the measuring device 100B. Upon input of the measurement information, the smartphone 10F, which functions as the riding evaluation module 10PB, sends the measurement information to the computer server 10S. The computer server 10S, which functions as the evaluation section 202B, evaluates the measurement information and selects onomatopoeia data. The smartphone 10F receives onomatopoeia selection information from the computer server 10S. The smartphone 10F obtains onomatopoeia data from the onomatopoeia database, based on the selection information. The smartphone 10F outputs the obtained onomatopoeia as sound from the loudspeaker of the smartphone 10F. Alternatively, the smartphone 10F outputs the onomatopoeia as an image in the display of the smartphone 10F.

The "outputting section" in the present embodiment may be provided by a speedometer of the motorcycle 1. The speedometer may be provided with a display as part thereof, for displaying onomatopoeia.

In the present embodiment, description was made for a case where the riding evaluation module 10P includes the onomatopoeia database 450. The arrangement allows the onomatopoeia obtaining section 300 to obtain onomatopoeia data in real time. This makes it possible for the outputting section 500 to give the rider real time presentation of onomatopoeia as riding evaluation.

Another embodiment may be that the motorcycle 1 does not carry the onomatopoeia database but the onomatopoeia database is disposed in a server on a network. In this case, the onomatopoeia obtaining section 300 obtains onomatopoeia data via the network by means of wireless communication. When compared to the case where the motorcycle 1 carries the onomatopoeia database, onomatopoeia data presentation is not in real time yet it is possible to present the rider with onomatopoeia as a riding evaluation. By utilizing modern high-speed data communications, it is possible for the rider to receive onomatopoeia presented as riding evaluation while he/she continues his/her riding training on the motorcycle 1.

As still another embodiment, the onomatopoeia obtaining section 300 may automatically generate onomatopoeia correspondingly to riding evaluations. Onomatopoeia is a category of words which appeals to sensations commonly shared by people. Therefore, it is possible to build a database which relates specific phrases to human sensations and the like. As another option, a database may be built which relates existing onomatopoeia with meanings, and by expanding/converting these it is possible to build an algorithm for automatic generation of onomatopoeia. An onomatopoeia obtaining section 300 which has an automatic onomatopoeia generation capability makes it possible for more appropriate presentation of onomatopoeia to be generated for riding evaluation.

As described thus far, the riding evaluation apparatus 10 according to the present embodiment presents the rider with riding evaluation by using onomatopoeia. Onomatopoeia has a characteristic that one piece of onomatopoeia can express evaluation contents regarding a plurality of evaluation items. For example, as demonstrated with the judgment criteria table T2 and the judgment criteria table T4, it is possible to express a riding evaluation which was made on the basis of a plurality of riding evaluation items, with only one piece of onomatopoeia. Also, as another characteristic, onomatopoeia can be used to express multi-graded evaluation regarding one evaluation item. Thus, by receiving onomatopoeia, the rider of the motorcycle 1 can efficiently get a large amount of information regarding riding evaluation.

In the present embodiment, the "device for presenting an onomatopoeia regarding an evaluation result for a user's action" according to the present teaching was exemplified as the riding evaluation apparatus 10. The present teaching is applicable also to other evaluation apparatuses for various sports performed by a user. One example may be to apply the teaching to a training evaluation apparatus for a long-distance runner.

In evaluating a long-distance runner's training, the following onomatopoeias may be presented to the runner. For example, the runner's arm swinging action may be evaluated by presenting the following onomatopoeias: "bun-bun" ("bun-bun" in the Japanese sound), "sat-sat" ("sat-sat" in the Japanese sound), "tan-tan" ("tan-tan" in the Japanese sound), "choko-maka" ("choko-maka" in the Japanese sound). For another example, the runner's number of heart beats may be evaluated by presenting the following onomatopoeia: "baku-baku" ("baku-baku" in the Japanese sound), "dokun-dokun" ("dokun-dokun" in the Japanese sound), and "toku-toku" ("toku-toku" in the Japanese sound). For another example, the runner's respiration may be evaluated by presenting the following onomatopoeia: "zei-zei" ("zei-zei" in the Japanese sound), "haa-haa" ("haa-haa" in the Japanese sound), and "suu-suu" ("suu-suu" in the Japanese sound). For example, the runner's running speed may be evaluated by presenting the following onomatopoeia: "gune-gune" ("gune-gune" in the Japanese sound), "viewn-viewn" ("viewn-viewn" in the Japanese sound), "sui-sui" ("sui-sui" in the Japanese sound), and "noro-noro" ("noro-noro" in the Japanese sound).

In addition to the above-described modes of embodiment, the present teaching has an embodiment as a skill improvement promoting apparatus. The skill improvement promoting apparatus according to the present embodiment is a skill improvement promoting apparatus which presents a training result to a user who is exercising in a training, and includes: a measurement section for measurement of an event arising from an action of the user who performed a training; an evaluation section for evaluating an action of the user who performed the training, based on a measurement result of the measurement section; a data obtaining section for obtaining onomatopoeia data corresponding to the evaluation made by the evaluation section; and an outputting section for outputting the onomatopoeia data obtained by the data obtaining section thereby presenting the evaluation of the action to the user who made the training.

Human ability to perform information processing during an ongoing training is limited, and therefore it was conventionally difficult to provide a large amount of information. By using onomatopoeia, it becomes possible to provide a large amount of information with a simple phrase in a short time. Since evaluation is given in a concise manner with a short phrase, the user can get evaluation result while continuing the training. Then, he/she can reflect the evaluation result on his/her next action, whereby he/she can continue his/her training while making corrections on his/her own action. Especially, it is said that instantaneous feedback leads to a higher effect of learning in training. By utilizing the skill improvement promoting apparatus according to the present embodiment, it is possible to efficiently improve skills through a higher effect of learning.

It is not only during ongoing training but also in any ongoing motions/actions in which human ability to perform information processing is limited, and for this reason it was conventionally difficult to provide a large amount of information. By using onomatopoeia, it becomes possible to provide a large amount of information with a simple phrase in a short time. Since evaluation is given in a concise manner with a short phrase, the user can get evaluation result while continuing various motions/actions. The user can grasp content/state of his/her own action. He/She can also grasp a state of equipment, vehicle, etc. which is being controlled with his/her own action.

In the skill improvement promoting apparatus according to the present embodiment, the evaluation section makes one evaluation for a plurality of evaluation items, and the data obtaining section obtains one onomatopoeia data for the plurality of evaluation items.

If onomatopoeia is not utilized, evaluations regarding the plurality of evaluation items must be explained in the form of text for example, and the user must spend a long time to grasp the content. In other words, it is difficult for him/her to read and understand a long explanation while continuing some other action. However, onomatopoeia can express evaluations on a plurality of evaluation items concisely, so the user can grasp the evaluation result easily.

Also, in the skill improvement promoting apparatus according to the present embodiment, the evaluation section may make a multi-graded evaluation for one evaluation item, and the data obtaining section may obtain an onomatopoeia data which represents the multi-graded evaluation.

If onomatopoeia is not utilized, text for example, must be used in order to express evaluation contents in a multi-graded evaluation regarding one evaluation item, and the user must spend a long time to grasp the contents. In other words it is difficult for him/her to read and understand a long explanation while continuing some other actions. However, onomatopoeia can express a multi-graded evaluation on an evaluation item concisely, so the user can grasp the evaluation result easily.

Also, in the skill improvement promoting apparatus according to the present embodiment, the outputting section includes an image display section which outputs onomatopoeia data as text information. This enables to convey a training evaluation through the user's sense of vision.

Also, in the skill improvement promoting apparatus according to the present embodiment, the outputting section includes an audio outputting section which outputs onomatopoeia data as audio information. This enables to convey a training evaluation through the user's sense of hearing.

Also, in the skill improvement promoting apparatus according to the present embodiment, the evaluation section compares a measurement result or a calculated value based on the measurement result with a predetermined threshold value, and thereby evaluates the user's action. By comparing a measurement result or the like with a predetermined threshold value it is possible to obtain an evaluation result of the training in real time.

Also, in the skill improvement promoting apparatus according to the present embodiment, the measurement result includes information obtained from a measurement of a state of an operation object operated by the user. This enables evaluation of the user's action to be based on the state of the object operated by the user.

Also, in the skill improvement promoting apparatus according to the present embodiment, the measurement result includes information obtained from a measurement of a state of an operation object operated by the user: the operation object includes a vehicle; the user includes an operator of the vehicle; and the image display section is provided on a transparent of translucent member which is disposed ahead of the operator's line of sight. This allows the operator to see onomatopoeia which is displayed ahead of his/her line of sight.

Also, in the skill improvement promoting apparatus according to the present embodiment, a member on which the image display section is mounted includes a face shield of a helmet worn by the operator. This allows the operator to see onomatopoeia which is displayed in the face shield of the helmet positioned ahead of his/her line of sight.

Also, in the skill improvement promoting apparatus according to the present embodiment, the measurement result includes information obtained from a measurement of a state of an operation object operated by the user; the operation object includes a vehicle; the user includes an operator of the vehicle; and the audio outputting section includes a loudspeaker provided in the vehicle. This allows the operator to grasp information through the onomatopoeia outputted from the loudspeaker.

Also, in the skill improvement promoting apparatus according to the present embodiment, the measurement result includes information obtained by a measurement of a state of an operation object operated by the user; the operation object includes a vehicle; the user includes an operator of the vehicle; and the audio outputting section includes a loudspeaker provided in a helmet worn by the operator. By wearing the helmet, the operator can grasp information through the onomatopoeia outputted from the loudspeaker.

Also, in the skill improvement promoting apparatus according to the present embodiment, the outputting section makes real time output of the onomatopoeia data as obtained by the data obtaining section. This makes it possible to present training results quickly to the user.

Also, in the skill improvement promoting apparatus according to the present embodiment, the apparatus further includes a storage section which stores onomatopoeia data, and the data obtaining section obtains onomatopoeia data from the storage section. This makes it possible to present training results quickly to the user.

Also, in the skill improvement promoting apparatus according to the present embodiment, the data obtaining section may utilize wireless communications to obtain the onomatopoeia data from an external server. This makes it possible to use a shared, common onomatopoeia data by users. This also makes it possible to use a latest version of onomatopoeia data.

Also, in the skill improvement promoting apparatus according to the present embodiment, the data obtaining section may automatically generate onomatopoeia data in response to a given evaluation. This makes it possible to present onomatopoeia which describes training results in more detail.

Thus far, the device for presenting an onomatopoeia regarding an evaluation result for a user's action provided as an embodiment of the present teaching was described by using the riding evaluation apparatus 10 mounted on the motorcycle 1 as an example. In other words, description was made for a case where the teaching is used in a riding training for a rider who operates the motorcycle 1. However, the present teaching is applicable to trainings in a wider sense, including trainings of various sports, operation trainings for operation of various kinds of apparatus, etc.

The device for presenting an onomatopoeia regarding an evaluation result for a user's action provided as an embodiment of the present teaching is capable of presenting the user with evaluation results of a training under the state where the user is continuing his/her training. This allows the user to utilize the evaluation result as a feedback for his/her next action in the ongoing training. For example, if the present teaching is applied to a training of a long-distance runner, then the runner can get evaluation results while continuing the training. Therefore, he/she can utilize the evaluation results to make adjustments on his/her running form while continuing the training.

### REFERENCE SIGNS LIST

- 1: Motorcycle
- 10: Riding Evaluation Apparatus
- 10p: Riding Evaluation Module
- 250: Measurement Information Database
- 251: Judgment Criteria Database
- 450: Onomatopoeia Database

## Claims

1. A device for presenting an onomatopoeia regarding an evaluation result for a user's action, comprising:
a measurement result inputting section into which a measurement result measured by a measuring device regarding an event arising from a user's action is inputted;
an onomatopoeia data obtaining section which obtains onomatopoeia data that indicates an onomatopoeia corresponding to an evaluation of the user's action based on the measurement result inputted to the measurement result inputting section; and
an onomatopoeia outputting section which outputs the onomatopoeia data obtained by the onomatopoeia data obtaining section to a notification device capable of making a notification to the user in form of audio or text, thereby causing the notification device to present an onomatopoeia that correspond to the evaluation of the user's action in the form of audio or text while the user is carrying out the user's action.

2. The device for presenting an onomatopoeia regarding an evaluation result for a user's action according to Claim 1, wherein
the onomatopoeia data obtaining section obtains onomatopoeia data which indicates one onomatopoeia for a plurality of evaluation items that was obtained by making one evaluation for the plurality of evaluation items.

3. The device for presenting an onomatopoeia regarding an evaluation result for a user's action according to Claim 1 or Claim 2, wherein
the onomatopoeia data obtaining section obtains onomatopoeia data which indicates one onomatopoeia which is representing a multi-graded evaluation regarding one evaluation item that was obtained by making the multi-graded evaluation regarding the one evaluation item.

4. The device for presenting an onomatopoeia regarding an evaluation result for a user's action according to one of Claim 1 through Claim 3, wherein
the onomatopoeia data obtained by the onomatopoeia data obtaining section is provided, as the evaluation of the user's action, by comparison of the measurement result or a calculated value based on the measurement result with a predetermined threshold value.

5. The device for presenting an onomatopoeia regarding an evaluation result for a user's action according to one of Claim 1 through Claim 4, wherein
the measurement result contains information from a measurement of a state of an operation object operated by the user.

6. The device for presenting an onomatopoeia regarding an evaluation result for a user's action according to one of Claim 1 through Claim 5,
further comprises an evaluation section which evaluates the user's action based on the measurement result regarding the event arising from a user's action measured by the measuring device.

7. A program for presenting an onomatopoeia regarding an evaluation result for a user's action which causes a computer to execute:
a measurement result inputting process of inputting a measurement result measured by a measuring device regarding an event arising from a user's action;
an onomatopoeia data obtaining process of obtaining onomatopoeia data which indicates an onomatopoeia corresponding to an evaluation of the user's action based on the measurement result inputted by the measurement result inputting section; and
an onomatopoeia outputting process of outputting the onomatopoeia data obtained in the onomatopoeia data obtaining process to a notification device capable of making a notification to the user in a form of audio or text, thereby causing the notification device to present an onomatopoeia that corresponds to the evaluation of the user's action in the form of audio or text while the user is carrying out the user's action.

8. The program for presenting an onomatopoeia regarding an evaluation result for a user's action according to Claim 7, wherein
the onomatopoeia data obtaining process obtains onomatopoeia data which indicates one onomatopoeia for a plurality of evaluation items that was obtained by making one evaluation for the plurality of evaluation items.

9. The program for presenting an onomatopoeia regarding an evaluation result for a user's action according to Claim 7 or Claim 8, wherein
the onomatopoeia data obtaining process obtains onomatopoeia data which indicates one onomatopoeia which is representing a multi-graded evaluation regarding one evaluation item that was obtained by making the multi-graded evaluation regarding the one evaluation item.

10. The program for presenting an onomatopoeia regarding an evaluation result for a user's action according to one of Claim 7 through Claim 9, wherein
the onomatopoeia data obtained by the onomatopoeia data obtaining process is provided, as the evaluation of the user's action, by comparison of the measurement result or a calculated value based on the measurement result with a predetermined threshold value.

11. The program for presenting an onomatopoeia regarding an evaluation result for a user's action according to one of Claim 7 through Claim 10, wherein
the measurement result contains information from a measurement of a state of an operation object operated by the user.

12. The program for presenting an onomatopoeia regarding an evaluation result for a user's action according to one of Claim 7 through Claim 11, wherein the program causes the computer to further execute:
an evaluation process which evaluates the user's action based on the measurement result regarding the event arising from a user's action measured by the measuring device.

13. A method for presenting an onomatopoeia regarding evaluation result for a user's action, comprising:
a measurement result inputting step of inputting a measurement result measured by a measuring device regarding an event arising from a user's action;
an onomatopoeia data obtaining step of obtaining onomatopoeia data which indicates an onomatopoeia corresponding to an evaluation of the user's action based on the measurement result inputted by the measurement result inputting step; and
an onomatopoeia output step of outputting the onomatopoeia data obtained in the onomatopoeia data obtaining step to a notification device capable of making a notification to the user in form of audio or text, thereby causing the notification device to present an onomatopoeia that correspond to the evaluation of the user's action in the form of audio or text while user is carrying out the user's action.

14. The method for presenting an onomatopoeia regarding evaluation result for a user's action according to Claim 13, wherein
the onomatopoeia data obtaining step obtains onomatopoeia data which indicates one onomatopoeia for a plurality of evaluation items that was obtained by making one evaluation for the plurality of evaluation items.

15. The method for presenting an onomatopoeia regarding an evaluation result for a user's action according to Claim 13 or Claim 14, wherein
the onomatopoeia data obtaining step obtains onomatopoeia data which indicates one onomatopoeia which is representing a multi-graded evaluation regarding one evaluation item that was obtained by making the multi-graded evaluation regarding the one evaluation item.
